# EUROPÄISCHE PATENTSCHRIFT

(11) **EP 2 991 868 B1**
(45) Veröffentlichungstag und Bekanntmachung des Hinweises auf die Patenterteilung: **21.03.2018**
(21) Anmeldenummer: 14719265.2
(22) Anmeldetag: 16.04.2014
(51) Int. Cl.: B60T 8/40, B60T 8/48

(54) **HYDRAULISCHES BREMSSYSTEM FÜR EIN FAHRZEUG UND VERFAHREN ZUM BETREIBEN EINES HYDRAULISCHEN BREMSSYSTEMS EINES FAHRZEUGS**
HYDRAULIC BRAKE SYSTEM FOR A VEHICLE AND METHOD FOR OPERATING A HYDRAULIC BRAKE SYSTEM OF A VEHICLE
SYSTÈME DE FREINAGE HYDRAULIQUE POUR UN VÉHICULE ET PROCÉDÉ POUR FAIRE FONCTIONNER UN SYSTÈME DE FREINAGE HYDRAULIQUE D'UN VÉHICULE

(30) Priorität: 02.05.2013 DE 102013208036
(43) Veröffentlichungstag der Anmeldung: 09.03.2016
(73) Patentinhaber: Robert Bosch GmbH, 70442 Stuttgart (DE)
(72) Erfinder: STRENGERT, Stefan, 70469 Stuttgart (DE); JAIME, Ralf-Peter, 74074 Heilbronn (DE); KUNZ, Michael, 71711 Steinheim An Der Murr (DE)
(86) Internationale Anmeldenummer: PCT/EP2014/057752
(87) Internationale Veröffentlichungsnummer: WO 2014/177384

(56) Entgegenhaltungen:
- WO-A1-2008/058985
- WO-A1-2009/089944
- WO-A1-2011/160963
- DE-A1- 19 604 134
- DE-A1-102011 005 822

## Beschreibung

Die Erfindung betrifft ein hydraulisches Bremssystem für ein Fahrzeug. Des Weiteren betrifft die Erfindung ein Verfahren zum Betreiben eines hydraulischen Bremssystems eines Fahrzeugs.

### Stand der Technik

In der DE 10 2011 005 822 A1 sind Bremssysteme und Verfahren zum Betreiben der Bremssysteme beschrieben. Die Bremssysteme weisen jeweils einen abkoppelbaren Bremskreis auf, welcher über ein Trennventil an einem Hauptbremszylinder angebunden ist. Außerdem ist der abkoppelbare Bremskreis über ein Druckablassventil an einem Bremsflüssigkeitsreservoir angebunden. Auch die in der WO 2008/058985 A1 offenbarte Fahrzeugbremsanlage hat einen von ihrem Hauptbremszylinder mittels eines Schließens eines Trennventils abkoppelbaren Bremskreis. Weitere Bremssysteme mit je einem von einem Hauptbremszylinder mittels eines Schließens eines Trennventils abkoppelbaren Bremskreis und Verfahren zum Steuern eines derartigen Bremssystems sind in der WO 2009/089944 A1 beschrieben.

Demgegenüber hat die in der WO 2011/160963 A1 beschriebene hydraulische Bremsanlage zwei Bremskreise, welche von einem Hauptbremszylinder der hydraulischen Bremsanlage nicht abkoppelbar sind.

Des Weiteren offenbart die DE 196 04 134 A1 ein Verfahren und eine Vorrichtung zur Steuerung einer Bremsanlage eines Kraftfahrzeugs mit einem elektrischen Antrieb, wobei bei einer Nutzung des Verfahrens oder der Vorrichtung eine angeforderte Fahrzeugverzögerung vorzugsweise mittels einer regenerativen Abbremsung des Kraftfahrzeugs mittels des elektrischen Antriebs ausgeführt wird. Um einen während eines derartigen generatorischen Betriebs des elektrischen Antriebs unerwünschten Bremsdruckaufbau in mindestens einem Radbremszylinder der Bremsanlage zu begrenzen, wird eine aufgrund einer Bremspedalbetätigung in den mindestens einen Radbremszylinder einströmende Bremsflüssigkeit über mindestens ein zugeordnetes Radauslassventil in mindestens eine Speicherkammer verschoben.

### Offenbarung der Erfindung

Die Erfindung schafft ein hydraulisches Bremssystem für ein Fahrzeug mit den Merkmalen des Anspruchs 1 und ein Verfahren zum Betreiben eines hydraulischen Bremssystems eines Fahrzeugs mit den Merkmalen des Anspruchs 6.

### Vorteile der Erfindung

Die vorliegende Erfindung ermöglicht einem Fahrer jederzeit ein Einbremsen in den ersten Bremskreis. Erfindungsgemäß kann der Fahrer selbst bei einem geschlossenen (ersten) Umschaltventil das parallel dazu angeordnete/geschaltete Rückschlagventil überdrücken.

Somit ist auch in einer Fehlersituation, beispielsweise nach einem Ausfall des Fahrzeugbordnetzes, noch verlässlich gewährleistet, dass der Fahrer aktiv in den ersten Bremskreis einbremsen kann. Da der erste Bremskreis selbst nach einem Schließen des ersten Umschaltventils nicht von dem Hauptbremszylinder und damit vom Fahrer abgetrennt ist, können die Nachteile einer vollständigen Abtrennung eines Bremskreises nicht auftreten. Die vorliegende Erfindung umgeht somit die herkömmlicherweise oft auftretenden Nachteile von By-Wire-Bremssystemen.

Zusätzlich kann während einer Bremsung zumindest der erste Bremsdruck in dem mindestens einen ersten Radbremszylinder zuerst durch ein zumindest teilweises Öffnen des mindesten Verblend-Ventils auf einen Ansprechdruck der mindestens einen Speicherkammer und anschließend durch ein zumindest teilweises Öffnen des Druckauslassventils auf (nahezu) den Atmosphärendruck reduziert werden. Die auf diese Weise reduzierbare/unterbindbare Bremswirkung des mindestens einen ersten Radbremszylinders kann beispielsweise zum Verblenden eines Generator-Bremsmoments mindestens eines Elektromotors genutzt werden.

Mittels der vorliegenden Erfindung ist es möglich, restdruckfrei und rein regenerativ zu bremsen. Insbesondere kann mittels der vorliegenden Erfindung zumindest der erste Bremsdruck in dem mindestens einen ersten Radbremszylinder des ersten Bremskreises unter einen Ansprechdruck der Speicherkammer des ersten Bremskreises reduziert werden. In der Regel kann auch ein in dem mindestens einen zweiten Radbremszylinder des zweiten Bremskreises vorliegender zweiter Bremsdruck mittels der vorliegenden Erfindung unter den Ansprechdruck der Speicherkammer reduziert werden. Somit kann die Speicherkammer des ersten Bremskreises, wie beispielsweise eine Niederdruck-Speicherkammer zur Volumenzwischenlagerung genutzt werden, ohne dass dazu der Nachteil eines ersten Bremsdrucks und/oder zweiten Bremsdrucks gleich dem Ansprechdruck der Speicherkammer in Kauf zu nehmen ist. Wie unten genauer ausgeführt wird, kann mittels der vorliegenden Erfindung deshalb eine regenerative Effizienz eines Bremssystems vorteilhaft gesteigert werden. Die vorliegende Erfindung kann somit zusätzlich dazu eingesetzt werden, einen Fahrer zum Gebrauch eines energiesparenden und emissionsärmeren Fahrzeugs anzuregen.

Es wird ausdrücklich darauf hingewiesen, dass die vorliegende Erfindung auch nach einem Überschreiten des Jump-in-Bereichs für eine Volumenzwischenlagerung noch weiter nutzbar ist. Deshalb erfordert die Einsetzbarkeit der vorliegenden Erfindung keine Beschränkung eines regenerativen Bremsens auf den Jump-in-Bereich. Somit kann auch eine starke Bremsbetätigung zum schnellen Aufladen einer Fahrzeugbatterie genutzt werden. Die vorliegende Erfindung trägt somit dazu bei, möglichst viel Energie während eines Abbremsens des Fahrzeugs regenerativ zu gewinnen, und auf diese Weise einen Kraftstoffverbrauch und eine Schadstoffemission eines Fahrzeugs zu reduzieren. Außerdem bewirkt die vorliegende Erfindung nicht die Nachteile eines Brake-By-Wire-Bremssystems. Stattdessen hat der Fahrer bei einer Nutzung der vorliegenden Erfindung immer die Möglichkeit, über ein Überbrücken des zweiten Umschaltventils auch in dem an das Bremsflüssigkeitsreservoir angebundenen zweiten Bremskreis einzubremsen.

In einer vorteilhaften Ausführungsform ist die Ansteuereinrichtung dazu ausgelegt, das mindestens eine erste Steuersignal an mindestens ein Radauslassventil des ersten Bremskreises als das mindestens eine Verblend-Ventil auszugeben. Somit kann ein bereits in der Regel vorhandenes Ventil als das mindestens eine Verblend-Ventil genutzt werden. Die vorliegende Erfindung ermöglicht somit ein Begrenzen zumindest des ersten Bremsdrucks des ersten Bremskreises auch ohne dessen Ausstattung mit einem neuartigen Ventil. Auf diese Weise sind die Herstellungskosten und der Bauraumbedarf des Bremssystems reduzierbar.

Bevorzugter Weise ist die Ansteuereinrichtung zusätzlich dazu ausgelegt, das mindestens eine erste Steuersignal und/oder das mindestens eine zweite Steuersignal unter zusätzlicher Berücksichtigung zumindest einer bereitgestellten Information bezüglich eines mittels mindestens eines Elektromotors aktuell maximal ausführbaren Kann-Generator-Bremsmoments auszugeben. Somit kann die vorliegende Erfindung gezielt in Situationen eingesetzt werden, in denen der mindestens eine Elektromotor zum generatorischen Abbremsen des Fahrzeugs zur Verfügung steht. Sofern jedoch die Geschwindigkeit des Fahrzeugs unter einer Mindest-Einsetzgeschwindigkeit zum generatorischen Betreiben des mindestens einen Elektromotors liegt oder die Fahrzeugbatterie bereits vollständig aufgeladen ist, kann mittels des hydraulischen Bremssystems rein hydraulisch abgebremst werden. Somit ist gewährleistbar, dass eine entfallende Einsetzbarkeit des mindestens einen Elektromotors zum generatorischen Abbremsen des Fahrzeugs verlässlich überbrückbar ist.

In einer vorteilhaften Weiterbildung ist die Ansteuereinrichtung zusätzlich in einem zweiten Betriebsmodus dazu ausgelegt, zum Begrenzen oder Verhindern einer Steigerung zumindest des ersten Bremsdrucks in dem mindestens einen ersten Radbremszylinder des ersten Bremskreises trotz der Betätigung des Bremsbetätigungselements das mindestens eine Verblend-Ventil in seinem geschlossenen Zustand zu belassen und das Druckablassventil derart in den zumindest teilgeöffneten Zustand zu steuern, dass Bremsflüssigkeit in das ausgangsseitig an dem Druckablassventil angebundene Bremsflüssigkeitsreservoir verschiebbar ist. Somit können mittels der Ansteuereinrichtung zwei unterschiedliche Verblendstrategien ausführbar sein. In einer bevorzugten Ausführungsform kann die Ansteuervorrichtung gezielt in den Betriebsmodus aus zumindest dem ersten Betriebsmodus und dem zweiten Betriebsmodus steuerbar sein, welcher im Hinblick auf einen Zustand mindestens einer Komponente des mit der Steuervorrichtung ausgestatteten Fahrzeugs, einer Umgebungsbedingung und/oder einer Verkehrssituation bevorzugt wird.

Des Weiteren sind die oben beschriebenen Vorteile realisierbar durch ein Ausführen eines korrespondierenden Verfahrens zum Betreiben eines hydraulischen Bremssystems eines Fahrzeugs.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der Steuervorrichtung und eines damit ausgestatteten Bremssystems;
- Fig. 2: eine schematische Darstellung einer zweiten Ausführungsform der Steuervorrichtung und des damit ausgestatteten Bremssystems;
- Fig. 3a bis 3e: Koordinatensysteme zum Erläutern einer ersten Ausführungsform des Verfahrens zum Betreiben eines hydraulischen Bremssystems eines Fahrzeugs; und
- Fig. 4a bis 4e: Koordinatensysteme zum Erläutern einer zweiten Ausführungsform des Verfahrens zum Betreiben eines hydraulischen Bremssystems eines Fahrzeugs.

### Ausführungsformen der Erfindung

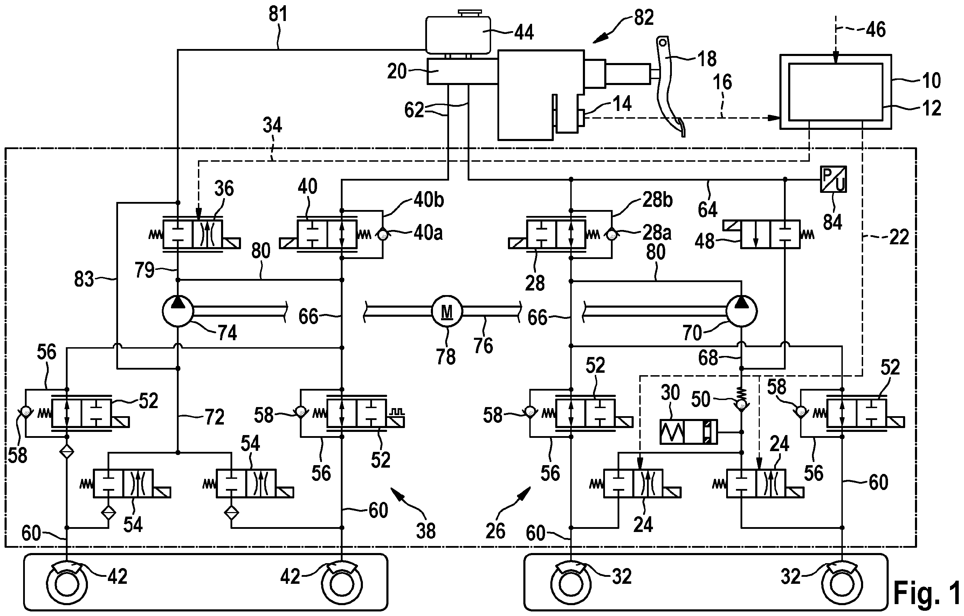

Fig. 1 zeigt eine schematische Darstellung einer ersten Ausführungsform der Steuervorrichtung und eines damit ausgestatteten Bremssystems.

Die in Fig. 1 schematisch dargestellte Steuervorrichtung 10 umfasst eine Ansteuereinrichtung 12, welche zumindest in einem ersten Betriebsmodus dazu ausgelegt ist, zumindest ein von mindestens einem Bremsbetätigungselement-Sensor 14 bereitgestelltes Sensorsignal 16 zu berücksichtigen. Der mindestens eine Bremsbetätigungselement-Sensor 14 kann beispielsweise ein Bremsbetätigungsweg-Sensor, wie insbesondere ein Pedalweg-, ein Differenzweg- und/oder ein Stangenwegsensor, ein Fahrerbremskraftsensor und/oder ein Fahrerbremsdrucksensor sein. Die Ausbildbarkeit des Bremsbetätigungselement-Sensors 14 ist jedoch nicht auf die hier aufgezählten Sensortypen limitiert. Das mindestens eine bereitgestellte Sensorsignal 16 umfasst somit eine Information bezüglich einer Betätigungsstärke einer Betätigung eines Bremsbetätigungselements 18 des Bremssystems mit der Steuervorrichtung 10 durch einen Fahrer, wie z.B. eine Fahrerbremskraft, einen Fahrerbremsdruck und/oder einen Verstellweg mindestens einer Komponente des Bremsbetätigungselements 18. Das Bremsbetätigungselement 18 kann beispielsweise ein Bremspedal 18 sein.

Die Ansteuereinrichtung 12 ist (zumindest in dem ersten Betriebsmodus) unter Berücksichtigung des mindestens einen Sensorsignals 16 dazu ausgelegt, zumindest zeitweise während einer Betätigung des an einem Hauptbremszylinder 20 des hydraulischen Bremssystems angebundenen Bremsbetätigungselements 18 mindestens ein erstes Steuersignal 22 auszugeben. Das mindestens eine erste Steuersignal 22 ist an mindestens ein Verblend-Ventil 24 eines ersten Bremskreises 26 des hydraulischen Bremssystems, welcher über ein erstes Umschaltventil 28 des ersten Bremskreises 26 an dem Hauptbremszylinder 20 angebunden ist, ausgebbar. Mittels des mindestens einen ersten Steuersignals 22 ist das mindestens eine Verblend-Ventil 24 derart in einem zumindest teilgeöffneten Zustand steuerbar, dass Bremsflüssigkeit in mindestens eine Speicherkammer 30 des ersten Bremskreises 26 verschiebbar ist.

Insbesondere kann auf diese Weise ein Bremsflüssigkeitsvolumen, welches einem aufgrund der Betätigung des Bremsbetätigungselements 18 aus dem Hauptbremszylinder 20 in den ersten Bremskreis 26 gedrückten Volumen von Bremsflüssigkeit (nahezu) entspricht, in die mindestens eine Speicherkammer 30 des ersten Bremskreises 26 verschiebbar sein. Somit kann durch ein Ausgeben des mindestens einen ersten Steuersignals 22 an das mindestens eine Verblend-Ventil 24 sichergestellt werden, dass trotz der Betätigung des Bremsbetätigungselements 18 zumindest ein in mindestens einem ersten Radbremszylinder 32 des ersten Bremskreises 26 vorliegender erster Bremsdruck (auf einen vorgegebenen vergleichsweise geringen Druck) begrenzbar/limitierbar ist. In der Regel ist in diesem Fall der erste Bremsdruck zumindest in dem mindestens einen ersten Radbremszylinder 32 des ersten Bremskreises 26 auf einen Ansprechdruck der mindestens einen Speicherkammer 30 begrenzbar.

Die mindestens eine Speicherkammer 30 kann beispielsweise eine Niederdruck-Speicherkammer des ersten Bremskreises 26 sein. Somit kann durch ein Ausgeben des mindestens einen ersten Steuersignals 22 gewährleistet werden, dass trotz der Betätigung des Bremsbetätigungselements 18 durch den Fahrer zumindest der in dem mindestens einen ersten Radbremszylinder 32 des ersten Bremskreises 26 vorliegende erste Bremsdruck auf den Ansprechdruck der Niederdruck-Speicherkammer begrenzt bleibt.

Der Fahrer des mit dem hydraulischen Bremssystem ausgestatteten Fahrzeugs hat somit die Möglichkeit, mittels einer Betätigung eines an dem Hauptbremszylinder 20 angebundenen Bremsbetätigungselements 18 jederzeit direkt zumindest in den ersten Bremskreis 26 einzubremsen. Gleichzeitig kann Bremsflüssigkeit/Volumen aus dem ersten Bremskreis 26 in die mindestens eine Speicherkammer 30 abgelassen werden, um einen unerwünschten Druckaufbau in dem mindestens einen ersten Radbremszylinder 32 entgegenzuwirken. Somit bietet das hydraulische Bremssystem die Vorteile einer wahlweisen Reduzierbarkeit zumindest des in dem mindestens einen ersten Radbremszylinder 32 vorliegenden ersten Bremsdrucks ohne eine Auslegung des ersten Bremskreises 26 als By-Wire-Bremskreis. Deshalb können die Vorteile der wahlweisen Reduzierbarkeit zumindest des ersten Bremsdrucks genutzt werden, ohne dass dazu die Nachteile/Probleme eines By-Wire-Bremskreises für den ersten Bremskreis 26 in Kauf zu nehmen sind.

Bei einer erfindungsgemäßen Ausstattung des Bremssystems mit einem zweiten Bremskreis 40 und einem Hauptbremszylinder 20 mit einem (nicht dargestellten) Schwimmkolben zwischen den beiden Druckkammern der beiden Bremskreise 26 und 38 ist auf diese Weise zusätzlich ein in mindestens einem zweiten Radbremszylinder 42 des zweiten Bremskreises 38 vorliegender zweiter Bremsdruck trotz der Betätigung des Bremsbetätigungselements 18 auf den Ansprechdruck der mindestens einen Speicherkammer 30 begrenzbar ist. Die gemeinsame Begrenzbarkeit/Reduzierbarkeit des ersten Bremsdrucks und des zweiten Bremsdrucks ist bei einem Hauptbremszylinder 20 mit einem Schwimmkolben, einem geöffneten ersten Umschaltventil 28 und bei einer "offenen" hydraulischen Anbindung des zweiten Bremskreises 38 an den Hauptbremszylinder 20 automatisch gewährleistet.

Außerdem ist mittels der (zumindest in den ersten, erfindungsgemäßen Betriebsmodus gesteuerten) Ansteuereinrichtung 12 unter Berücksichtigung zumindest des mindestens einen Sensorsignals 16 auch mindestens ein zweites Steuersignal 34 an ein Druckablassventil 36 des zweiten Bremskreises 38 des hydraulischen Bremssystems, welcher über ein zweites Umschaltventil 40 des zweiten Bremskreises 38 an dem Hauptbremszylinder 20 angebunden ist und den mindestens einen zweiten Radbremszylinder 42 aufweist, ausgebbar. Mittels des mindestens einen zweiten Steuersignals 34 ist das Druckablassventil 36 derart in einen zumindest teilgeöffneten Zustand steuerbar, dass Bremsflüssigkeit in ein ausgangsseitig an dem Druckablassventil 36 angebundenes Bremsflüssigkeitsreservoir 44 verschiebbar ist. Auf diese Weise ist zumindest der in dem mindestens einen ersten Radbremszylinder 32 des ersten Bremskreises 26 vorliegende erste Bremsdruck zusätzlich reduzierbar. Erfindungsgemäß kann durch das zumindest teilweise Öffnen des Druckablassventils zumindest der in dem mindestens einen ersten Radbremszylinder 32 des ersten Bremskreises 26 vorliegende erste Bremsdruck unter den Ansprechdruck der mindestens einen Speicherkammer 30 reduziert werden. Erfindungsgemäß ist auf diese Weise ein erster Bremsdruck von (nahezu) dem Atmosphärendruck zumindest in dem mindestens einen ersten Radbremszylinder 32 des ersten Bremskreises 26 trotz der Betätigung des Bremsbetätigungselements 18 realisierbar.

Des Weiteren ist durch das zumindest teilweise Öffnen des Druckablassventils 36 der in dem mindestens einen zweiten Radbremszylinder 42 des zweiten Bremskreises 38 vorliegende zweite Bremsdruck auch unter den Ansprechdruck der mindestens einen Speicherkammer 30 reduzierbar. Somit ist durch das zumindest teilweise Öffnen des Druckablassventils 36 (bei geöffneten Umschaltventilen 28 und 40) sicherstellbar, dass in den beiden Bremskreisen 26 und 38 gleichzeitig ein Bremsdruck von (nahezu) dem Druck in dem Bremsflüssigkeitsreservoir 44/dem Atmosphärendruck vorliegt. Man kann dies auch als eine Druckregelung auf Hauptbremszylinder-Ebene bei geöffneten Umschaltventilen 28 und 40 umschreiben. Somit ist ein mittels der Radbremszylinder 32 und 42 der beiden Bremskreise 26 und 38 auf die zugeordneten Räder ausübbares Gesamt-Reib-Bremsmoment durch das Ansteuern des Druckablassventils 36 mittels der Steuervorrichtung 10 trotz der Betätigung des Bremsbetätigungselements 18 auf (nahezu) Null reduzierbar.

Die mittels der Steuersignale 22 und 34 trotz der Betätigung des Bremsbetätigungselements 18 verhinderbare Bremswirkung des mindestens einen ersten Radbremszylinders 32 und des mindestens einen zweiten Radbremszylinders 42 kann zum generatorischen Einsetzen mindestens eines (nicht skizzierten) Elektromotors genutzt werden. Dabei wird der mindestens eine Elektromotor, welcher häufig auch als elektrischer Antriebsmotor des Fahrzeugs nutzbar ist, so betrieben, dass ein Generator-Bremsmoment zum (zusätzlichen) Abbremsen des Fahrzeugs bewirkt wird. Eine auf diese Weise gewonnene elektrische Energie kann in eine Fahrzeugbatterie zurückgespeist werden. Aufgrund der unterbundenen Bremswirkung des mindestens einen ersten Radbremszylinders 32 und des mindestens einen zweiten Radbremszylinders 42 kann mittels des generatorischen Einsatzes des mindestens einen Elektromotors die Fahrzeugbatterie aufgeladen werden, ohne dass während des Aufladevorgangs eine von dem Fahrer mittels der Betätigung des Bremsbetätigungselements 18 vorgebbare Soll-Fahrzeugverzögerung überschritten wird. Stattdessen kann der mindestens eine Elektromotor so angesteuert werden, dass die vom Fahrer vorgegebene Soll-Fahrzeugverzögerung genau eingehalten wird. Die vorliegende Erfindung ermöglicht somit ein vergleichsweise schnelles Aufladen der Fahrzeugbatterie bei einem verlässlichen Einhalten der vom Fahrer vorgegebenen Soll-Fahrzeugverzögerung. Die Steuervorrichtung 10 realisiert damit einen reduzierten Kraftstoffverbrauch und eine geringere Schadstoffemission des damit ausgestatteten Fahrzeugs bei einem verlässlichen Bremskomfort.

Vorzugsweise ist das Druckablassventil 36 ein stetig stellbares/stetig steuerbares Ventil. Das Druckablassventil 36 kann in diesem Fall auch als ein stetig regelbares Ventil bezeichnet werden. Es wird jedoch darauf hingewiesen, dass die Ausbildbarkeit des Druckablassventils 20 nicht auf einen bestimmten Ventiltyp limitiert ist.

Unter dem Bremsflüssigkeitsreservoir 44 wird ein Volumen verstanden, in welchem der Atmosphärendruck vorliegt und
welches vorzugsweise über mindestens eine Austauschbohrung, wie beispielsweise eine Schnüffelbohrung, mit dem Hauptbremszylinder 20 verbunden ist. Das Bremsflüssigkeitsreservoir 44 kann jedoch auch mit einem Hauptbremszylinder 20 über ein Zentralventil hydraulisch verbunden sein.

Unter dem ersten Umschaltventil 28 ist erfindungsgemäß ein Ventil zu verstehen, welches ein Rückschlagventil 28a in einer parallel zu dem Umschaltventil 28 verlaufenden Bypassleitung 28b aufweist. Das Rückschlagventil 28a ist so ausgerichtet, dass es mittels eines Drucks in dem Hauptbremszylinder 20 überdrückbar ist. Auch parallel zu dem zweiten Umschaltventil 40 ist eine Bypassleitung 40b mit einem Rückschlagventil 40a, welches mittels des Drucks in dem Hauptbremszylinder 20 überdrückbar ist, angeordnet. Somit hat der Fahrer des mit dem hydraulischen Bremssystem ausgestatteten Fahrzeugs die Möglichkeit, in beide Bremskreise 26 und 38 direkt einzubremsen. Damit ist selbst bei geschlossenen Umschaltventilen 28 und 40 ein ausschließlich von der Fahrerbremskraft bewirkter Bremsdruckaufbau in allen Radbremszylindern 32 und 42 noch verlässlich ausführbar. Bevorzugter Weise ist die Ansteuereinrichtung 12 zusätzlich dazu ausgelegt, das mindestens eine erste Steuersignal 22 und/oder das mindestens eine zweite Steuersignal 34 unter zusätzlicher Berücksichtigung zumindest einer bereitgestellten Information 46 bezüglich eines mittels des mindestens einen Elektromotors aktuell maximal ausführbaren Kann-Generator-Bremsmoments auszugeben. Die Steuervorrichtung 10 kann somit auch berücksichtigen, dass der mindestens eine Elektromotor, beispielsweise aufgrund einer vollständigen Aufladung der Fahrzeugbatterie oder einer zu geringen Fahrzeuggeschwindigkeit, in bestimmten Situationen nicht einsetzbar ist.

Die Ansteuereinrichtung 12 ist vorzugsweise dazu ausgelegt, das mindestens eine erste Steuersignal 22 an mindestens ein Radauslassventil 24 des ersten Bremskreises 26 als das mindestens eine Verblend-Ventil 24 auszugeben. Somit kann zum Transferieren von Bremsflüssigkeit in die mindestens eine Speicherkammer 30 ein in der Regel bereits in einem Bremskreis 26 vorhandenes Ventil 24 genutzt werden. Der erste Bremskreis 26 muss somit nicht mit einem zusätzlichen Ventil als dem mindestens einen Verblend-Ventil 24 ausgestattet werden. Es wird jedoch darauf hingewiesen, dass als das mindestens eine Verblend-Ventil 24 auch ein Hochdruckschaltventil 48 des ersten Bremskreises 26 eingesetzt werden kann. In diesem Fall ist es vorteilhaft, auf die Anordnung eines Rückschlagventils 50 zwischen dem Hochdruckschaltventil 48 und der mindestens einen Speicherkammer 30 zu verzichten. Auch andere Ventiltypen können für das mindestens eine Verblend-Ventil 24 genutzt werden.

In einer vorteilhaften Weiterbildung ist die Ansteuereinrichtung 12 zusätzlich in einem zweiten Betriebsmodus dazu ausgelegt, zum Begrenzen oder Verhindern einer Steigerung zumindest des ersten Bremsdrucks in dem mindestens einen ersten Radbremszylinder 32 des ersten Bremskreises 26 trotz der Betätigung des Bremsbetätigungselements 18 das mindestens eine Verblend-Ventil 24 in seinem geschlossenen Zustand zu belassen und das Druckablassventil 36 derart in dem zumindest teilgeöffneten Zustand zu steuern, dass Bremsflüssigkeit in das ausgangsseitig an dem Druckablassventil 36 angebundene Bremsflüssigkeitsreservoir 44 verschiebbar ist.

Die Steuervorrichtung 10 ist in einer Vielzahl verschiedener hydraulischer Bremssysteme eines Fahrzeugs einsetzbar. Die nachfolgenden Beschreibungen zu dem Bremssystem der Fig. 1 sind deshalb nur beispielhaft zu interpretieren:
Jeder der in Fig. 1 dargestellten Bremskreise 26 und 38 weist zwei Radbremszylinder 32 und 42 auf. Es wird jedoch darauf hingewiesen, dass die Einsetzbarkeit der Steuervorrichtung 10 nicht auf eine bestimmte Anzahl der in einem Bremskreis 26 und 38 vorliegenden Radbremszylinder 32 und 42 begrenzt ist. Jedem der Radbremszylinder 32 und 42 ist je ein Radeinlassventil 52 und je ein Radauslassventil 24 und 54 zugeordnet. Jedes der Radeinlassventile 52 weist je eine Bypassleitung 56 mit einem darin angeordneten Rückschlagventil 58 auf. Die Radeinlassventile 52 und die Radauslassventile 24 und 54 sind jeweils über sich aufgabelnde Leitungen 60 mit dem zugeordneten Radbremszylinder 32 und 42 verbunden.

Jedes Umschaltventil 28 und 40 ist über je eine Zufuhrleitung 62 an dem Hauptbremszylinder 20 angebunden. Auch das Hochdruckschaltventil 48 des ersten Bremskreises 26 ist über eine Leitung 64 an die Zufuhrleitung 62 des ersten Bremskreises 26 angebunden. Von jedem Umschaltventil 28 und 40 führt je eine sich verzweigende Leitung 66 zu den Radeinlassventilen 52 des jeweiligen Bremskreises 26 und 38. Über eine weitere sich aufgabelnde Leitung 68 sind die Radauslassventile 24 des ersten Bremskreises 26 an eine Saugseite einer ersten Pumpe 70 angebunden, wobei die mindestens eine Speicherkammer 30 und das Rückschlagventil 50 vorzugsweise zwischen den Radauslassventilen 24 und der ersten Pumpe 70 angeordnet sind. Auch die Radauslassventile 54 des zweiten Bremskreises 38 sind über eine weitere sich verzweigende Leitung 72 an eine Ansaugseite einer zweiten Pumpe 74 angebunden.

Die beiden Pumpen 70 und 74 können an einer gemeinsamen Welle 76 eines Motors 78 liegen. Die beiden Pumpen 70 und 74 können beispielsweise als Ein-Kolben-Pumpen ausgebildet sein. Das hydraulische Bremssystem der Fig. 1 ist somit als modifiziertes Standard-Modulationssystem, insbesondere als Zwei-Kolben-ESP-System, bezeichenbar. Das Bremssystem kann jedoch auch mit anders ausgeführten Modulationssystemen, wie beispielsweise Pumpen mit mehreren Kolben, asymmetrischen Pumpen und/oder Zahnradpumpen, ausgebildet sein. Jede der Pumpen 70 und 74 ist an ihrer Förderseite über eine Leitung 80 an die Leitung 66 des zugeordneten Bremskreises 26 und 38 angebunden.

In dem zweiten Bremskreis mündet eine weitere Leitung 79, über welche die Förderseite der zweiten Pumpe 74 mit dem Druckablassventil 36 verbunden ist, in der Leitung 80. Das Druckablassventil 36 ist über eine Saugleitung 81 mit dem Bremsflüssigkeitsreservoir 44 verbunden. Eine weitere Leitung 83 verläuft parallel zu dem Druckablassventil 36 und der zweiten Pumpe 74 von der Saugleitung 81 zu der Leitung 72.

Jeder der beiden Bremskreise 26 und 38 kann mit einem Drucksensor 84 ausgestattet sein. Z.B. kann der erste Bremskreis 26 einen Vordrucksensor 84 haben. Die Ausbildbarkeit des hydraulischen Bremssystems ist jedoch nicht auf die Ausstattung mit bestimmten Drucksensoren 84 limitiert.

Das Bremssystem der Fig. 1 weist einen Bremskraftverstärker 82 auf, welcher zwischen dem als Bremspedal ausgebildeten Bremsbetätigungselement 18 und dem Hauptbremszylinder 20 angeordnet ist. Der Bremskraftverstärker 82 kann z.B. ein elektromechanischer Bremskraftverstärker 82 sein. Das Bremssystem der Fig. 1 erlaubt damit eine vakuumfreie Auslegung der Bremskraftverstärkung. Die Ausbildbarkeit des Bremskraftverstärkers 82 ist jedoch nicht auf diesen Typ limitiert. Ebenso ist die Ausstattung des hydraulischen Bremssystems mit dem Bremskraftverstärker 82 optional.

Das Bremssystem der Fig. 1 ist somit eine Kombination aus einem elektromechanischem Bremskraftverstärker 82 und einem veränderten ESP-System. Es ist besonders für Fahrzeuge mit X-Bremskreisaufteilung geeignet. Man kann dies auch so umschreiben, dass das hydraulische Bremssystem für eine X-Bremskreisaufteilung vorteilhaft ausgelegt ist. Unter einer X-Bremskreisaufteilung kann verstanden werden, dass die einem Bremskreis 26 und 38 zuordbaren Räder diagonal an einem Fahrzeug liegen. Im Vergleich zu anderen herkömmlichen hydraulischen Bremssystemen mit X-Bremskreisaufteilung weist das Bremssystem der Fig. 1 den Vorteil auf, dass während eines regenerativen Bremsens der in allen Radbremszylindern 32 und 42 vorliegende Bremsdruck auf (nahezu) Null einstellbar ist. Ein unerwünschter hydraulischer Restdruck in den Radbremszylindern 32 und 42 muss deshalb während eines rekuperativen Bremsens nicht in Kauf genommen werden.

Der elektromechanische Bremskraftverstärker 82 realisiert außerdem eine aktiv veränderbare Verstärkungscharakteristik, welche an einen Verblendvorgang anpassbar ist. Während der Betätigung des Bremsbetätigungselements 18 kann die mittels des elektromechanischen Bremskraftverstärkers 82 bereitgestellte Unterstützungskraft an den ersten Bremsdruck und/oder an den zweiten Bremsdruck vorteilhaft angepasst werden. Beispielsweise kann nach/während eines Transferierens von Bremsflüssigkeit in die mindestens eine Speicherkammer 30 die Unterstützungskraft so reduziert werden, dass der Fahrer kraftmäßig keine Auswirkungen der Bremsflüssigkeitsverschiebung spürt. Entsprechend kann auch mittels einer Steigerung der Unterstützungskraft ein standartgemäßes Bremsbetätigungsgefühl (Pedalgefühl) trotz eines Transferierens von Bremsflüssigkeit aus der mindestens einen Speicherkammer 30 realisiert werden. Das Bremssystem der Fig. 1 ermöglicht somit einem Fahrer selbst während eines Verblendens eines zeitlich variierenden Generator-Bremsmoments des mindestens einen Elektromotors ein vorteilhaftes (standardgemäßes) Bremsbetätigungsgefühl (Pedalgefühl).

Das Bremssystem der Fig. 1 gewährleistet gleichzeitig eine Kraftverblendung und eine Volumenverblendung. Aufgrund der realisierbaren Kraftverblendung kann wahlweise rein hydraulisch, hydraulisch und regenerativ oder rein regenerativ gebremst werden. Somit kann auch in Situationen, in welchen das aktuell verfügbare Generator-Bremsmoment des mindestens einen generatorisch betreibbaren Elektromotors nicht ausreicht, um den Fahrerbremswunsch vollständig umzusetzen, der Fahrerbremswunsch verlässlich ausgeführt werden. Aufgrund der gleichzeitig ausführbaren Volumenverblendung ist sicherstellbar, dass der Fahrer trotz eines Wechsels zwischen einem rein regenerativen Bremsen, einem regenerativen und hydraulischen Bremsen oder einem rein hydraulischen Bremsen keine veränderte Betätigungscharakteristik während der Betätigung des Bremsbetätigungselements 18 spürt.

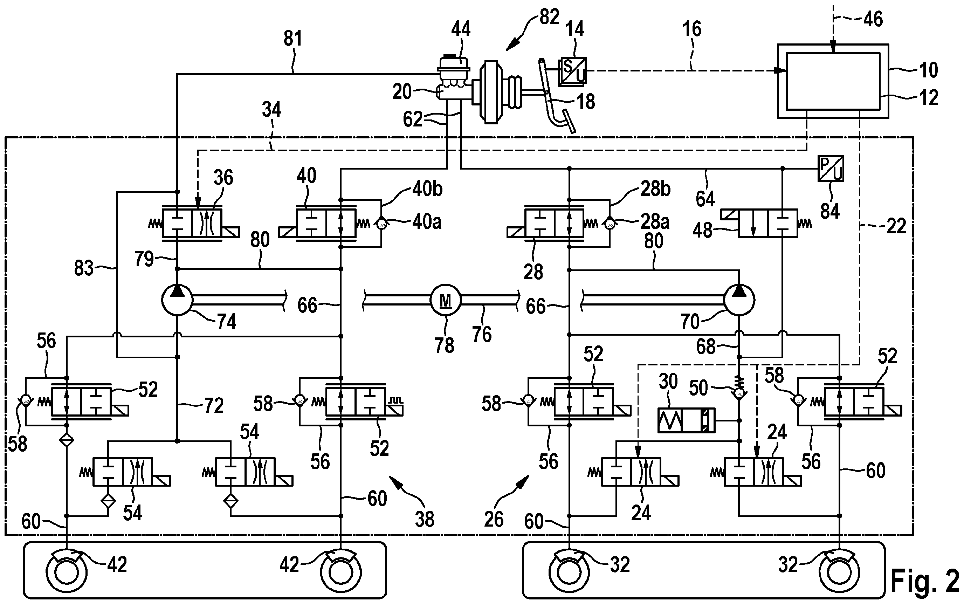

Fig. 2 zeigt eine schematische Darstellung einer zweiten Ausführungsform der Steuervorrichtung und des damit ausgestatteten Bremssystems.

Das in Fig. 2 schematisch dargestellte Bremssystem weist im Gegensatz zu der zuvor beschriebenen Ausführungsform einen Vakuum-Bremskraftverstärker 82 als Bremskraftverstärker 82 auf. Ansonsten hat das Bremssystem der Fig. 2 alle bereits oben ausgeführten Bremssystemkomponenten.

Auch das Bremssystem der Fig. 2 gewährleistet die oben beschriebene vorteilhafte Volumenverblendung. Die mittels des elektromechanischen Bremskraftverstärkers 82 ausführbare Kraftverblendungsfunktion kann hingegen von dem Vakuum-Bremskraftverstärker 82 nicht erbracht werden. Dies kann jedoch durch eine optionale Limitierung der regenerativen Bremswirkung auf einen Jump-in-Bereich des Vakuum-Bremskraftverstärkers 82 behoben werden. Auch bei einem Vakuum-Bremskraftverstärker 82 liegt in der Regel innerhalt des Jump-In-Bereichs keine direkte Kopplung zwischen dem Bremsbetätigungselement 18 und dem Hauptbremszylinder 20 vor. Somit spürt der Fahrer während eines Verblendens innerhalt des Jump-in-Bereichs nicht, ob rein hydraulisch, hydraulisch und regenerativ oder rein regenerativ gebremst wird. Deshalb ist auch bei einem derartigen Bremskraftverstärker ein gutes Bremsbetätigungsgefühl (Pedalgefühl) für den Fahrer gewährleistet.

Die oben ausgeführten Steuervorrichtungen 10/Bremssysteme können insbesondere in einem Hybrid- oder in einem Elektrofahrzeug vorteilhaft eingesetzt werden. Die Einsetzbarkeit der Steuervorrichtungen 10/Bremssysteme ist jedoch nicht auf einen bestimmten Fahrzeugtyp limitiert.

Es wird nochmals darauf hingewiesen, dass die oben beschriebenen Bremssysteme sowohl für eine X-Bremskreisaufteilung als auch für eine II-Bremskreisaufteilung geeignet sind. Somit ist es nicht notwendig, unterschiedliche Steuervorrichtungen 10 für verschieden ausgelegte Bremssysteme zu entwickeln. Unabhängig von der Bremskreisaufteilung kann die Steuervorrichtung 10 deshalb auf der gleichen Produktionslinie gefertigt werden, was die Produktvarianz reduziert. Es wird z.B. jeweils nur eine Hydraulikeinheit, eine ECU und eine Softwarevariante unabhängig von der Bremskreisaufteilung benötigt. Da somit höhere Stückzahlen von der Steuervorrichtung 10 verwendbar sind, reduzieren sich auch deren Kosten. Außerdem können somit auch die Vorteile eines parallelen Druckaufbaus in beiden Bremskreisen während des Verblendens für Fahrzeuge mit X-Bremskreisaufteilung genutzt werden.

Auch bei den oben beschriebenen Bremssystemen können aktive/autonome Druckaufbauten, d.h. Bremsanforderungen ohne eine Betätigung des Bremsbetätigungselements 18 durch den Fahrer, wie in einem konventionellen Bremssystem über die Pumpen 70 und 74, das Hochdruckschaltventil 48, das geschlossene Druckablassventil 36, die geschlossenen Umschaltventile 28 und 40 und die geschlossenen Radauslassventile 24 und 54 bewirkt werden. Bei dem Bremssystem der Fig. 1 kann außerdem auch der elektromechanische Bremskraftverstärker 82 für einen aktiven/autonomen Druckaufbau genutzt werden. Insbesondere kann bei dem Bremssystem der Fig. 1 der für den aktiven/autonomen Druckaufbau eingesetzte Aktuator unter Berücksichtigung einer gewünschten Druckaufbaudynamik, einer optimierten Geräuschentwicklung und/oder einer bevorzugten Bremsbetätigungselement-Charakteristik ausgewählt werden.

Bei einem Ausfall des Modulationssystems weisen die oben beschriebenen Bremssysteme noch eine verstärkte Bremsfunktion an allen Radbremszylindern 32 und 42 auf. Somit sind keine Funktionseinschränkungen in einer derartigen Situation zu befürchten. Bei einem Ausfall des elektromechanischen Bremskraftverstärkers 82 des Bremssystems der Fig. 1 kann der Fahrer bei der Bremsbetätigung mittels der Pumpen 70 und 74 noch unterstützt werden.

In einer vorteilhaften Weiterbildung kann jede oben ausgeführte Steuervorrichtung 10 auch dazu ausgebildet sein, weitere Komponenten des damit ausgestatteten Bremssystems anzusteuern. In einer vorteilhaften Weiterbildung ist die Ansteuereinrichtung 12 beispielsweise zusätzlich dazu ausgelegt, unter Berücksichtigung zumindest der bereitgestellten Information 46 bezüglich des mittels des mindestens einen Elektromotors aktuell maximal ausführbaren Kann-Generator-Bremsmoments mindestens eine Pumpe 70 und 74 so anzusteuern, dass, sofern das Kann-Generator-Bremsmoment (in absehbarer Zeit) kleiner als ein aktuell mittels des mindestens einen Elektromotors ausgeführtes Generator-Bremsmoment wird, eine entfallende Einsetzbarkeit des mindestens einen Elektromotors kompensierbar ist. Die Steuervorrichtung 10 realisiert in diesem Fall auch eine Förderhydraulik zum Einbringen eines Volumens von Bremsflüssigkeit in mindestens einen der Bremskreise 26 und 38.

Eine Steuervorrichtung 10 gemäß der oben beschriebenen Ausführungsformen kann beispielsweise in eine Bremssystem-Steuerautomatik oder in eine zentrale Fahrzeug-Steuerautomatik integriert sein. Eine derartige Integration der Steuervorrichtung 10 ist jedoch optional.

Die Steuervorrichtung 10, bzw. die Ansteuereinrichtung 12, kann auch dazu ausgelegt sein, die im Weiteren beschriebenen Verfahrensschritte auszuführen.

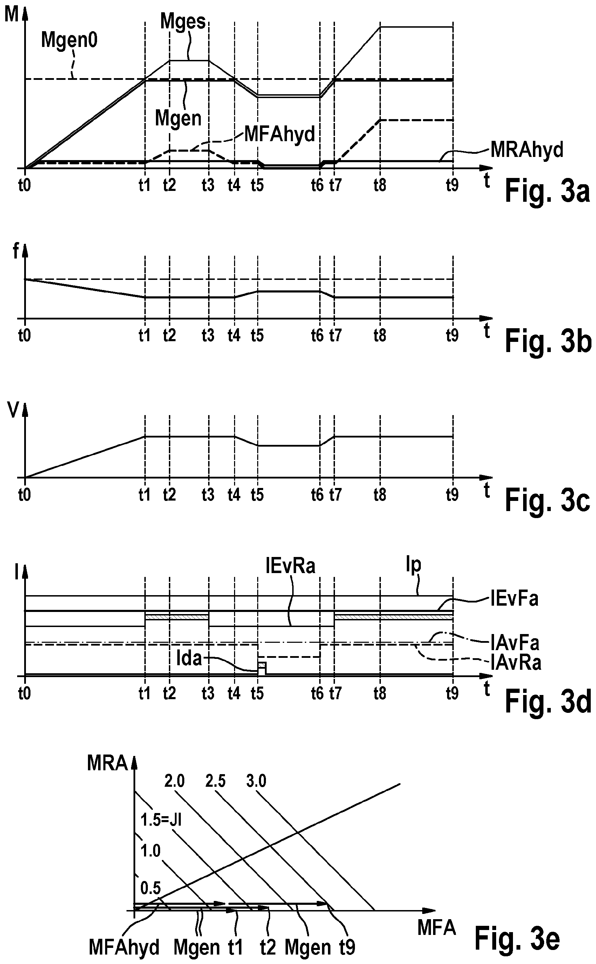

Fig. 3a bis 3e zeigen Koordinatensysteme zum Erläutern einer ersten Ausführungsform des Verfahrens zum Betreiben eines hydraulischen Bremssystems eines Fahrzeugs.

Das mittels der Koordinatensysteme der Fig. 3a bis 3e wiedergegebene Verfahren wird beispielhaft zum Betreiben des Bremssystems der Fig. 1 mit X-Bremskreisaufteilung ausgeführt. Jeder Bremskreis weist somit einen Vorderachs-Radbremszylinder mit einem zugeordneten Vorderachs-Radeinlassventil und einem zugeordneten Vorderachs-Radauslassventil und einen Hinterachs-Radbremszylinder, welchem ein Hinterachs-Radeinlassventil und ein Hinterachs-Radauslassventil zugeordnet sind, auf. Es wird jedoch darauf hingewiesen, dass die Ausführbarkeit des Verfahrens nicht auf die Verwendung eines derartigen Bremssystems limitiert ist.

In den Koordinatensystemen der Fig. 3a bis 3d ist die Abszisse jeweils die Zeitachse t. Eine Ordinate des Koordinatensystems der Fig. 3a gibt ein Bremsmoment M an. Eine Ordinate des Koordinatensystems der Fig. 3b entspricht einem Verstärkungsfaktor f, um welchen der elektromechanische Bremskraftverstärker eine von dem Fahrer auf das Bremsbetätigungselement ausgeübte Fahrerbremskraft verstärkt. Mittels einer Ordinate des Koordinatensystems der Fig. 3c ist ein in der mindestens einen Speicherkammer des ersten Bremskreises zwischengespeichertes Volumen V angegeben. Eine Ordinate des Koordinatensystems der Fig. 3d gibt eine Stromstärke I an, mit welcher verschiedene Komponenten des Bremssystems angesteuert werden. Während eine Abszisse des Koordinatensystems der Fig. 3e ein (mittels der Vorderachs-Radbremszylinder) auf eine Vorderachse ausgeübtes Vorderachs-Bremsmoment MFA angibt, entspricht eine Ordinate des Koordinatensystems der Fig. 3e einem (mittels der Hinterachs-Radbremszylinder) auf eine Hinterachse ausgeübten Hinterachs-Bremsmoments MRA.

Bei einem Ausführen des Verfahrens wird zumindest ein im mindestens einem ersten Radbremszylinder eines ersten Bremskreises des hydraulischen Bremssystems, welcher über ein erstes Umschaltventil des ersten Bremskreises an einem Hauptbremszylinder des hydraulischen Bremssystems angebunden ist, vorliegender erster Bremsdruck begrenzt. Dies geschieht durch ein Steuern mindestens eines Verblend-Ventils des ersten Bremskreises in einem zumindest teilgeöffneten Zustand zumindest zeitweise während einer Betätigung eines an dem Hauptbremszylinder angebundenen Bremsbetätigungselements zum Verschieben von Bremsflüssigkeit in mindestens eine Speicherkammer des ersten Bremskreises.

Der in dem vorausgehenden Absatz beschriebene Vorgang wird beispielsweise zwischen den Zeiten t0 und t1 ausgeführt. Vor dem Zeitpunkt t0 betätigt ein Fahrer des mit dem hydraulischen Bremssystem ausgestatteten Fahrzeugs das Bremsbetätigungselement nicht. Ab dem Zeitpunkt t0 betätigt der Fahrer das Bremsbetätigungselement und verschiebt auf diese Weise Bremsflüssigkeit aus dem Hauptbremszylinder zumindest in den ersten Bremskreis.

Beispielsweise wird zwischen den Zeiten t0 und t1 zum Verschieben der Bremsflüssigkeit mindestens ein Radauslassventil des ersten Bremskreises als das mindestens eine Verblend-Ventil zumindest zeitweise in den zumindest teilgeöffneten Zustand gesteuert. Es ist ausreichend, für diesen Verfahrensschritt lediglich eines der Radauslassventile des ersten Bremskreises zu verwenden. In der dargestellten Ausführungsform wird das als stromlos geschlossenes Ventil ausgebildete Hinterachs-Radauslassventil mittels eines Hinterachs-Radauslassventil-Steuersignals IAvRa zwischen den zweiten t0 und t1 geöffnet, während das ebenfalls als stromlos geschlossenes Ventil ausgebildete Vorderachs-Radauslassventil aufgrund eines Vorderachs-Radauslassventil-Steuersignals IAvFa gleich Null geschlossen bleibt. Die als stromlos offene Ventile ausgebildeten Radeinlassventile (Hinterachs-Radeinlassventil und Vorderachs-Radeinlassventil) bleiben aufgrund des Hinterachs-Radeinlassventil-Steuersignals IEvRa und Vorderachs-Radeinlassventil-Steuersignals IEvFa gleich Null jeweils offen. Ein als stromlos geschlossenes Ventil ausgebildetes Druckablassventil kann mittels eines Druckablassventil-Steuersignals Ida gleich Null zwischen den Zeiten t0 und t1 geschlossen bleiben. Da ein Betrieb der Pumpen zwischen den Zeiten t0 und t1 nicht benötigt wird, kann auch ein Pumpensteuersignal Ip gleich Null sein.

Das oben beschriebene Bestromen der Ventile bewirkt in allen Radbremszylindern einen Bremsdruck, welcher gleich einem Ansprechdruck der mindestens einen Speicherkammer, wie z.B. einer Niederdruckspeicherkammer, ist. Obwohl der Fahrer zwischen den Zeiten t0 und t1 ein steigerndes (Soll-)Gesamt-Bremsmoment Mges anfordert, bleiben die in den Radbremszylindern vorliegenden Bremsdrücke damit minimal. Die begrenzte Bremswirkung der Radbremszylinder kann zum generatorischen Einsetzen mindestens eines Elektromotors genutzt werden. Somit ist zwischen den Zeiten t0 und t1, sofern ein maximal ausführbares Kann-Generator-Bremsmoment MgenO größer als das von dem Fahrer angeforderte Gesamt-Bremsmoment Mges ist, ein vergleichsweise großes Generator-Bremsmoment Mgen ausführbar, ohne dass die von dem Fahrer angeforderte Fahrzeugverzögerung überschritten wird. Die von dem Fahrer angeforderte Fahrzeugverzögerung kann somit zwischen den Zeiten t0 und t1 zu einem großen Prozentsatz rekuperativ ausgeführt werden.

Das zwischen den Zeiten t0 und t1 aus dem Hauptbremszylinder in den ersten Bremskreis gedrückte Bremsflüssigkeitsvolumen wird in die mindestens eine Speicherkammer abgelassen, wodurch das in der mindestens einen Speicherkammer zwischengespeicherte Volumen V zwischen den Zeiten t0 und t1 zunimmt. Mittels eines Hauptbremszylinder-Drucksensors kann eine aufgrund des zwischengespeicherten Volumens V am elektromechanischen Bremskraftverstärker fehlende Druckkraft ermittelt werden. Eine entsprechende Reduktion des Verstärkungsfaktors f zwischen den Zeiten t0 und t1 sorgt für ein Kräftegleichgewicht zwischen einer auf das Bremsbetätigungselement durch den Hauptbremszylinder ausgeübten Rückstellkraft und der Summe der Fahrerbremskraft und der Unterstützungskraft des elektromechanischen Bremskraftverstärkers trotz der Zunahme des zwischengespeicherten Volumens V.

Durch die Nutzung mindestens einer Niederdruckspeicherkammer als der mindestens einen Speicherkammer zum Zwischenspeichern des Volumens V verbleibt jedoch ein niedriger hydraulischer Restdruck ungleich Null (z.B. gleich dem Ansprechdruck der Speicherkammer) zwischen den Zeiten t0 und t5 in allen Radbremszylindern. Die Höhe des Restdrucks ist durch die Federsteifigkeit der Rückstellfeder der mindestens einen Niederdruckspeicherkammer begründet. Der Restdruck bewirkt ein unerwünschtes Rest-Bremsmoment für ein mittels der Hinterachs-Radbremszylinder bewirktes Hinterachs-Radbremszylinder-Bremsmomente MRAhyd und ein mittels der Vorderachs - Radbremszylinder bewirktes Vorderachs -Radbremszylinder-Bremsmomente MFAhyd und verhindert damit ein erwünschtes rein regeneratives Bremsen.

Zur Zeit t1 übersteigt das vom Fahrer angeforderte (Soll-)Gesamt-Bremsmoment Mges das maximal ausführbare Kann-Generator-Bremsmoment Mgen0. (Bevorzugter Weise werden bei dem Ausführen des Verfahrens das mindestens eine Verblendventil und/oder das Druckablassventil unter zusätzlicher Berücksichtigung zumindest einer bereitgestellten Information bezüglich eines mittels mindestens eines Elektromotors aktuell maximal ausführbaren Kann-Generators-Bremsmoments MgenO angesteuert.) Ab der Zeit t1 wird deshalb, während von dem mindestens einen Elektromotor weiterhin das maximal mögliche Kann-Generator-Bremsmoment MgenO angefordert wird, ein zusätzlicher hydraulischer Bremsdruck in mindestens einem Vorderachs-Radbremszylinder aufgebaut. Dazu bleiben die Vorderachs-Radauslassventile geschlossen (IAvFa gleich Null). Die Hinterachs-Radeinlassventile werden mittels eines Hinterachs-Radeinlassventil-Steuersignals IEvRa ungleich Null (delta-p-Ansteuerung) zumindest zeitweise geschlossen. Das vom Fahrer bei einer Erhöhung des Bremswunsches zusätzlich verschobene Volumen wird dadurch in die Vorderachs-Radbremszylinder gebracht. Es entsteht nun ein gesteigertes Vorderachs-Radbremszylinder-Bremsmoment MFAhyd, welches vorzugsweise zusammen mit dem Generator-Bremsmoment Mgen und dem Hinterachs-Radbremszylinder-Bremsmoment MRAhyd das vom Fahrer angeforderte (Soll-)Gesamt-Bremsmoment Mges ergibt.

Das zwischengespeicherte Volumen V bleibt ab der Zeit t1 konstant. Damit ist eine weitere Reduktion des Verstärkungsfaktors f ab der Zeit t1 nicht erforderlich.

Zwischen den Zeiten t2 und t3 bleibt der Fahrerbremswunsch konstant. Ab der Zeit t3 löst der Fahrer das Bremsbetätigungselement und reduziert auf diese Weise das angeforderte (Soll-)Gesamt-Bremsmoment Mges. Deshalb wird ab der Zeit t3 Volumen aus den Vorderachs-Radbremszylindern wieder entnommen, um das Vorderachs-Radbremszylinder-Bremsmoment MFAhyd an das reduzierte (Soll-)Gesamt-Bremsmoment Mges anzupassen, während das Generator-Bremsmoment Mgen noch konstant gehalten wird. Die Hinterachs-Radeinlassventile können mittels eines Hinterachs-Radeinlassventil-Steuersignals IEvRa gleich Null wieder geöffnet werden.

Zum Zeitpunkt t4 fällt der Fahrerbremswunsch wieder unter das maximal ausführbare Kann-Generator-Bremsmoment Mgen0. Ab der Zeit t4 kann somit wieder zu einem hohen Prozentsatz regenerativ gebremst werden. Allerdings bewirkt weiterhin der Restdruck in den Radbremszylindern einen unerwünschten Rest-Betrag (ungleich Null) für das Vorderachs-Radbremszylinder-Bremsmoment MFAhyd und das Hinterachs-Radbremszylinder-Bremsmoment MRAhyd und damit verhindert ein erwünschtes rein regeneratives Bremsen.

Zum zusätzlichen Reduzieren zumindest des in dem mindestens einen ersten Radbremszylinder des ersten Bremskreises vorliegenden ersten Bremsdrucks (unter dem Ansprechdruck der mindestens einen Speicherkammer) wird deshalb ab der Zeit t5 das Druckablassventil des zweiten Bremskreises des hydraulischen Bremssystems in einen zumindest teilgeöffneten Zustand gesteuert (Ida ungleich Null). Auf diese Weise kann Bremsflüssigkeit in ein ausgangsseitig an dem Druckablassventil angebundenes Bremsflüssigkeitsreservoir verschoben werden. Deshalb fällt ab der Zeit t5 der Bremsdruck in allen Radbremszylindern unter den Ansprechdruck der mindestens einen Speicherkammer. Insbesondere ist in der Regel auf diese Weise ein Druck von (nahezu) dem Atmosphärendruck in allen Radbremszylindern ab der Zeit t5 realisierbar.

Durch die Reduzierung des Bremsdrucks in allen Radbremszylindern unter den Ansprechdruck der mindestens einen Speicherkammer können ab der Zeit t5 ein das Vorderachs-Radbremszylinder-Bremsmoment MFAhyd und ein das Hinterachs-Radbremszylinder-Bremsmoment MRAhyd (nahezu) gleich Null gewährleistet werden. Somit kann ab der Zeit t5 rein regenerativ gebremst werden. Dies gewährleistet eine vorteilhaft hohe rekuperative Effizienz, und damit ein vergleichsweise schnelles Aufladen einer Fahrzeugbatterie.

Das hier beschriebene Verfahren bietet zusätzlich zu der gesteigerten regenerativen Effizienz auch den Vorteil, dass das ab der Zeit t5 über das (kurzzeitig) geöffnete Druckablassventil in das Bremsflüssigkeitsreservoir verschobene Volumen vergleichsweise klein ist. Es lässt sich deshalb leicht zu einem späteren Zeitpunkt mittels lediglich einer Pumpe des zweiten Bremskreises über die Saugleitung zurückfördern. Aufgrund der niedrigen auszuführenden Pumpendrehzahl treten kaum/keine Geräusche auf, und die nur geringen Anforderungen zu genügende Pumpe hat eine gesteigerte Lebensdauer.

Der Zeitpunkt t5 kann so gewählt werden, dass zwischen den Zeiten t5 und t6 ein konstanter Fahrerbremswunsch vorliegt. Es wird jedoch darauf hingewiesen, dass die Ausführbarkeit des vorteilhaften Verfahrensschritts nicht auf eine derartige Bremsbetätigungssituation reduziert ist. Optionaler Weise können ab der Zeit t5 auch die Hinterachs-Radauslassventile mittels eines Hinterachs-Radauslassventil-Steuersignals IAvRa gleich Null geschlossen werden.

Ab der Zeit t6 steigert der Fahrer das angeforderte (Soll-)Gesamt-Bremsmoment Mges. Zur Zeit t7 übersteigt das (Soll-)Gesamt-Bremsmoment Mges das maximal ausführbare Kann-Generator-Bremsmoment Mgen0. Zwischen den Zeiten t8 und t9 liegt ein konstanter hoher Fahrerbremswunsch vor. Zwischen den Zeiten t6 bis t9 können damit die zuvor schon beschriebenen Verfahrensschritte erneut ausgeführt werden.

Das vorteilhafte Verfahren wird in dem Beispiel der Fig. 3a bis 3e unter Verwendung eines Bremssystems ausgeführt, dessen mindestens einer Elektromotor ausschließlich auf die Vorderachse wirkt. Das Generator-Bremsmoment Mgen trägt somit ausschließlich zum Vorderachs-Bremsmoment MFA bei. Außerdem nimmt bei dem hier beschriebenen Verfahren das Vorderachs-Radbremszylinder-Bremsmoment MFAhyd (welches in das Vorderachs-Bremsmoment MFA eingeht) deutlich höhere Werte als das Hinterachs-Radbremszylinder-Bremsmoment MRAhyd (welches das Hinterachs-Bremsmoment bildet) an. Wie anhand des Koordinatensystems der Fig. 3e erkennbar ist, ist die Bremskraftverteilung zwischen den Zeiten t1 bis t9 somit stark vorderachslastig.

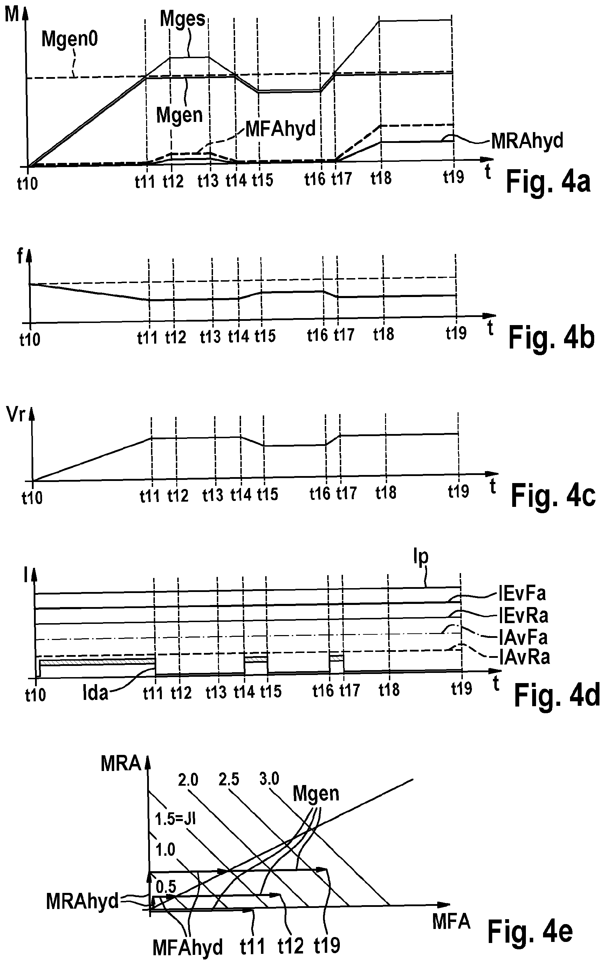

Fig. 4a bis 4e zeigen Koordinatensysteme zum Erläutern einer zweiten Ausführungsform des Verfahrens zum Betreiben eines hydraulischen Bremssystems eines Fahrzeugs.

Auch das hier beschriebene Verfahren kann mit dem Bremssystem der Fig. 1 mit X-Bremskreisaufteilung ausgeführt werden. Bezüglich der Abszissen und Ordinaten der Koordinatensysteme der Fig. 4a, 4b, 4c und 4e wird auf die der Fig. 3a, 3b, 3c und 3e verwiesen. Das Koordinatensystem der Fig. 4c weist als Abszisse die Zeitachse t auf, während die Ordinate ein in dem Bremsflüssigkeitsreservoir zwischengespeichertes Volumen Vr angibt.

Das anhand der Fig. 4a bis 4e schematisch wiedergegebene Verfahren ist eine Weiterbildung der zuvor beschriebenen Ausführungsform. Die zu den Zeiten t10 bis t19 erfolgenden Verfahrensschritte können beispielsweise vor oder nach den Verfahrensschritten der zuvor beschriebenen Ausführungsform ausgeführt werden. Zur besseren Verständlichkeit der zwischen den Zeiten t10 bis t19 ausgeführten Verfahrensschritte entspricht das von dem Fahrer angeforderte (Soll-)Gesamt-Bremsmoment Mges jenem zu den Zeiten t0 bis t9.

Bei der Ausführung des Verfahrens der Fig. 4a bis 4e wird eine Steigerung zumindest des ersten Bremsdrucks in dem ersten Radbremszylinder des ersten Bremskreises trotz der Betätigung des Bremsbetätigungselements zwischen den Zeiten t10 und t11 verhindert oder begrenzt, indem, während das mindestens eine Verblend-Ventil in seinem geschlossenen Zustand belassen wird, das Druckablassventil derart in den zumindest teilgeöffneten Zustand gesteuert wird, das Bremsflüssigkeit in das ausgangsseitig an dem Druckablassventil angebundene Bremsflüssigkeitsreservoir verschiebbar ist. Dazu wird zwischen den Zeiten t10 und t11 das Druckablassventil mittels eines Druckablassventil-Steuersignals Ida ungleich Null in den zumindest teilgeöffneten Zustand gesteuert. Demgegenüber können die Radeinlassventile und die Radauslassventile zwischen den Zeiten t10 und t11 unbestromt bleiben.

Bei dem Verfahren der Fig. 4a bis 4e kann zwischen den Zeiten t10 und t11 rein regenerativ gebremst werden. Das durch den Fahrer verschobene Volumen kann als zwischengespeichertes Volumen Vr komplett über die Saugleitung in das Bremsflüssigkeitsreservoir abgelassen werden. Auch auf diese Weise ist realisierbar, dass zwischen den Zeiten t10 bis t11 kaum ein/kein Restbremsdruck in den Radbremszylindern vorliegt. Gleichzeitig kann mittels des Hauptbremszylinder-Drucksensors die Höhe der aufgrund des zwischengespeicherten Volumens Vr am elektromechanischen Bremskraftverstärkter fehlenden Druckkraft ermittelt werden. Eine entsprechende Reduktion des Verstärkungsfaktors f des elektromechanischen Bremskraftverstärkers kann trotzdem für ein Kräftegleichgewicht am Bremsbetätigungselement sorgen. Der Fahrer bemerkt somit nichts von der Verschiebung der Bremsflüssigkeit in das Bremsflüssigkeitsreservoir.

Zwischen den Zeiten t11 bis t14 übersteigt das von dem Fahrer angeforderte (Soll-)Gesamt-Bremsmoment Mges das maximal ausführbare Kann-Generator-Bremsmoment Mgen0. Deshalb ist zwischen den Zeiten t11 bis t14 eine zusätzliche hydraulische Bremswirkung, welche einer Differenz zwischen dem (Soll-)Gesamt-Bremsmoment Mges und dem maximal ausführbare Kann-Generator-Bremsmoment MgenO entspricht, erwünscht. Dafür wird das Druckablassventil mittels eines Druckablassventil-Steuersignals Ida gleich Null geschlossen. Die Radeinlass- und Radauslassventile bleiben unbestromt.

Das vom Fahrer zusätzlich zwischen den Zeiten t11 und t12 verschobene Volumen wird in alle Radbremszylinder gebracht. Aufgrund unterschiedlicher Koeffizienten der Vorderachs-Radbremszylinder und der Hinterachs-Radbremszylinder kann jedoch trotz eines gleichen Bremsdruckes in allen Radbremszylindern ein Vorderachs-Radbremszylinder-Bremsmoment MFAhyd größer als dem Hinterachs-Radbremszylinder-Bremsmoment MRAhyd bewirkt werden. Das Vorderachs-Radbremszylinder-Bremsmoment MFAhyd kann beispielsweise um einen Faktor 2 größer als das Hinterachs-Radbremszylinder-Bremsmoment MRAhyd sein. Somit ist auch zwischen den Zeiten t11 und t14 die Bremskraftverteilung stark vorderachslastig. Die Veränderung der Bremskraftverteilung fällt damit bei einem Wechsel von dem rein regenerativen Bremsen vor der Zeit t11 zu dem regenerativen und hydraulischen Bremsen zwischen den Zeiten t11 und t14 geringer aus. Dies ist insbesondere anhand des Koordinatensystems der Fig. 4e dargestellt. Während der Zeiten t11 bis t14 ist keine weitere Reduktion des Verstärkungsfaktors f notwendig.

Ab der Zeit t13 löst der Fahrer das Bremspedal leicht und reduziert das (Soll-)Gesamt-Bremsmoment Mges. Zwischen den Zeiten t13 und t14 kann die hydraulische Bremswirkung an den reduzierten Fahrerbremswunsch angepasst werden, indem lediglich aus den Radbremszylindern Volumen entnommen wird. Bei einem Fahrerbremswunsch unter dem maximal ausführbaren Kann-Generator-Bremsmoment MgenO ab der Zeit t14 kann das Druckablassventil mittels eines Druckablassventil-Steuersignals Ida ungleich Null wieder geöffnet werden. Durch eine Entnahme von Bremsflüssigkeitsvolumen aus dem Bremsflüssigkeitsreservoir kann das in den Bremskreisen vorliegende Volumen an den Fahrerbremswunsch angepasst werden, wobei gleichzeitig weiterhin rein regenerativ gebremst wird und das Auftreten eines Restdrucks in allen Radbremszylindern verhindert ist. Außerdem kann der Verstärkungsfaktor f zwischen den Zeiten t14 und t15 entsprechend dem abnehmenden (Soll-)Gesamt-Bremsmoment Mges/zwischengespeicherten Volumen Vr gesteigert werden.

Zwischen den Zeiten t16 und t19 können die in den vorausgehenden Absätzen beschriebenen Verfahrensschritte erneut ausgeführt werden.

Sofern während der Zeiten t10 bis t19 das maximal ausführbare Kann-Generator-Bremsmoment abnimmt, kann mittels der mindestens einen Pumpe des zweiten Bremskreises zusätzliches Volumen über die Saugleitung aus dem Bremsflüssigkeitsreservoir in die Bremskreise zurückgefördert werden. Dies bewirkt einen hydraulischen Bremsdruck in den Radbremszylindern, welcher entsprechend der gewünschten Radbremszylinder-Bremsmomente MRAhyd und MFAhyd einstellbar ist.

Auch bei der hier beschriebenen Weiterbildung wird ein hydraulischer Restdruck in allen relevanten Betriebssituationen vermieden. Da ein Öffnen der Radauslassventile vergleichsweise selten ausgeführt wird, ist die hier beschriebene Vorgehensweise kaum mit einer Geräuschentwicklung verbunden.

Es wird darauf hingewiesen, dass in allen oben beschriebenen Verfahren der Druckaufbau bei einem Einsetzen eines stetig steuerbaren Druckablassventils voll reversibel ist. Dies erhöht die funktionale Variabilität und die mögliche Rekuperationseffizienz bei einem Ausführen der Verfahren.

## Patentansprüche

1. Hydraulisches Bremssystem für ein Fahrzeug mit:
einem mittels eines Bremsbetätigungselements (18) betätigbaren Hauptbremszylinder (20) mit einem Schwimmkolben zwischen einer ersten Druckkammer und einer zweiten Druckkammer;
einem ersten Bremskreis (26), welcher über ein erstes Umschaltventil (28) des ersten Bremskreises (26) an der ersten, bremsbetätigungselementseitigen Druckkammer des Hauptbremszylinders (20) angebunden ist und mindestens einen ersten Radbremszylinder (32) aufweist;
einem zweiten Bremskreis (38), welcher über ein zweites Umschaltventil (40) des zweiten Bremskreises (38) an der zweiten Druckkammer des Hauptbremszylinders (20) angebunden ist und mindestens einen zweiten Radbremszylinder (42) aufweist, wobei die Umschaltventile (28,40) jeweils ein in Richtung Radbremszylinder (32,42) öffnendes Rückschlagventil (28a,40a) in einer parallel zu den Umschaltventilen (28,40) verlaufenden Bypassleitung (28b,40b) aufweisen; und
einer Steuervorrichtung (10) mit einer Ansteuereinrichtung (12), welche zumindest in einem ersten Betriebsmodus unter Berücksichtigung zumindest eines bereitgestellten Sensorsignals (16) mindestens eines Bremsbetätigungselement-Sensors (14) dazu ausgelegt ist, zumindest zeitweise während einer Betätigung des mit dem Hauptbremszylinder (20) des hydraulischen Bremssystems angebundenen Bremsbetätigungselements (18) mindestens ein erstes Steuersignal (22) an mindestens ein Verblend-Ventil (24) des ersten Bremskreises (26) auszugeben, wodurch das mindestens eine Verblend-Ventil (24) derart in einen zumindest teilgeöffneten Zustand steuerbar ist, dass Bremsflüssigkeit aus dem mindestens einen ersten Radbremszylinder (32) in mindestens eine Speicherkammer (30) des ersten Bremskreises (26) verschiebbar und zumindest ein in mindestens einem ersten Radbremszylinder (32) des ersten Bremskreises (26) vorliegender erster Bremsdruck auf einen Ansprechdruck der mindestens einen Speicherkammer (30) begrenzbar ist, wobei die Ansteuereinrichtung (12) zumindest in dem ersten Betriebsmodus unter Berücksichtigung des zumindest einen bereitgestellten Sensorsignals (16) auch dazu ausgelegt ist, mindestens ein zweites Steuersignal (34) an ein Druckablassventil (36) des zweiten Bremskreises (38) auszugeben, wodurch das Druckablassventil (36) derart in einen zumindest teilgeöffneten Zustand steuerbar ist, dass Bremsflüssigkeit in ein ausgangsseitig an dem Druckablassventil (36) angebundenes Bremsflüssigkeitsreservoir (44) verschiebbar und zumindest der in dem mindestens einen ersten Radbremszylinder (32) des ersten Bremskreises (26) vorliegende erste Bremsdruck zusätzlich unter den Ansprechdruck der mindestens einen Speicherkammer (30) reduzierbar ist.

2. Hydraulisches Bremssystem nach Anspruch 1, wobei die Ansteuereinrichtung (12) dazu ausgelegt ist, das mindestens eine erste Steuersignal (22) an mindestens ein Radauslassventil (24) des ersten Bremskreises (26) als das mindestens eine Verblend-Ventil (24) auszugeben.

3. Hydraulisches Bremssystem nach Anspruch 1 oder 2, wobei die Ansteuereinrichtung (12) zusätzlich dazu ausgelegt ist, das mindestens eine erste Steuersignal (22) und/oder das mindestens eine zweite Steuersignal (34) unter zusätzlicher Berücksichtigung zumindest einer bereitgestellten Information (46) bezüglich eines mittels mindestens eines Elektromotors aktuell maximal ausführbaren Kann-Generator-Bremsmoments (MgenO) auszugeben.

4. Hydraulisches Bremssystem nach einem der vorhergehenden Ansprüche, wobei die Ansteuereinrichtung (12) zusätzlich in einem zweiten Betriebsmodus dazu ausgelegt ist, zum Begrenzen oder Verhindern einer Steigerung zumindest des ersten Bremsdrucks in dem mindestens einen ersten Radbremszylinder (32) des ersten Bremskreises (26) trotz der Betätigung des Bremsbetätigungselements (18) das mindestens eine Verblend-Ventil (24) in seinen geschlossenen Zustand zu belassen und das Druckablassventil (36) derart in den zumindest teilgeöffneten Zustand zu steuern, dass Bremsflüssigkeit in das ausgangsseitig an dem Druckablassventil (36) angebundene Bremsflüssigkeitsreservoir (44) verschiebbar ist.

5. Hydraulisches Bremssystem nach Anspruch 1, wobei das hydraulische Bremssystem mit einer X-Bremskreisaufteilung ausgelegt ist.

6. Verfahren zum Betreiben eines hydraulischen Bremssystems eines Fahrzeugs mit zwei Bremskreisen, wobei die Bremskreise jeweils ein Umschaltventil mit jeweils ein in Richtung Radbremszylinder (32,42) öffnendes Rückschlagventil (28a,40a) in einer parallel zu den Umschaltventilen (28,40) verlaufenden Bypassleitung (28b,40b) aufweisen; mit dem Schritt:
Begrenzen zumindest eines in mindestens einem ersten Radbremszylinder (32) eines ersten Bremskreises (26) des hydraulischen Bremssystems, welcher über das erste Umschaltventil (28) des ersten Bremskreises (26) an einer ersten, bremsbetätigungselementseitigen Druckkammer eines Hauptbremszylinders (20) des hydraulischen Bremssystems angebunden ist, vorliegenden ersten Bremsdrucks durch Steuern mindestens eines Verblend-Ventils (24) des ersten Bremskreises (26) in einen zumindest teilgeöffneten Zustand zumindest zeitweise während einer Betätigung des an dem Hauptbremszylinder (20) angebundenen Bremsbetätigungselements (18) zum Verschieben von Bremsflüssigkeit aus dem mindestens einen ersten Radbremszylinder (32) in mindestens eine Speicherkammer (30) des ersten Bremskreises (26), wodurch der zumindest eine erste Bremsdruck auf einen Ansprechdruck der mindestens einen Speicherkammer (30) begrenzt wird; und mit dem weiteren Schritt:
Zusätzliches Reduzieren zumindest des in dem mindestens einen ersten Radbremszylinder (32) des ersten Bremskreises (26) vorliegenden ersten Bremsdrucks unter den Ansprechdruck der mindestens einen Speicherkammer (30) durch Steuern eines Druckablassventils (36) eines zweiten Bremskreises (38) des hydraulischen Bremssystems, welcher über das zweite Umschaltventil (40) des zweiten Bremskreises (38) an einer zweiten Druckkammer des mit einem Schwimmkolben zwischen der ersten Druckkammer und der zweiten Druckkammer ausgestatteten Hauptbremszylinders (20) angebunden ist und mindestens einen zweiten Radbremszylinder (42) aufweist, in einen zumindest teilgeöffneten Zustand zum Verschieben von Bremsflüssigkeit in ein ausgangsseitig an dem Druckablassventil (36) angebundenes Bremsflüssigkeitsreservoir (44).

7. Verfahren nach Anspruch 6, wobei mindestens ein Radauslassventil (24) des ersten Bremskreises (26) als das mindestens eine Verblend-Ventil (24) zumindest zeitweise während der Betätigung des Bremsbetätigungselements (18) in den zumindest teilgeöffneten Zustand gesteuert wird.

8. Verfahren nach Anspruch 6 oder 7, wobei das mindestens eine Verblend-Ventil (24) und/oder das Druckablassventil (36) unter zusätzlicher Berücksichtigung zumindest einer bereitgestellten Information (46) bezüglich eines mittels mindestens eines Elektromotors aktuell maximal ausführbaren Kann-Generator-Bremsmoments (MgenO) angesteuert werden.

9. Verfahren nach einem der Ansprüche 6 bis 8, wobei eine Steigerung zumindest des ersten Bremsdrucks in dem mindestens einen ersten Radbremszylinder (32) des ersten Bremskreises (26) trotz der Betätigung des Bremsbetätigungselements (18) verhindert oder begrenzt wird durch die Schritte:
Belassen des mindestens einen Verblend-Ventils (24) in seinen geschlossenen Zustand; und
Steuern des Druckablassventils (36) derart in den zumindest teilgeöffneten Zustand, dass Bremsflüssigkeit in das ausgangsseitig an dem Druckablassventil (36) angebundene Bremsflüssigkeitsreservoir (44) verschoben wird.

10. Verfahren nach einem der Ansprüche 6 bis 9, wobei das hydraulische Bremssystem, welches mittels dieses Verfahrens betrieben wird, mit einer X-Bremskreisaufteilung ausgelegt ist.

## Claims

1. Hydraulic brake system for a vehicle having:
a master brake cylinder (20) which can be activated by means of a brake activation element (18) and has a floating piston between a first pressure chamber and a second pressure chamber;
a first brake circuit (26) which is connected to the first brake-activation-element-side pressure chamber of the master brake cylinder (20) via a first switching valve (28) of the first brake circuit (26) and has at least a first wheel brake cylinder (32);
a second brake circuit (38) which is connected to the second pressure chamber of the master brake cylinder (20) via a second switching valve (40) of the second brake circuit (38), and has at least a second wheel brake cylinder (42), wherein the switching valves (28, 40) each have a non-return valve (28a, 40a), which opens in the direction of the wheel brake cylinders (32, 42), in a bypass line (28b, 40b) which runs parallel to the switching valves (28, 40); and
a control device (10) having an actuation device (12) which, at least in a first operating mode, taking into account at least one supplied sensor signal (16) of at least one brake activation-element sensor (14), is configured to output, at least temporarily during an activation of the brake activation element (18) which is connected to the master brake cylinder (20) of the hydraulic brake system, at least a first control signal (22) to at least one blending valve (24) of the first brake circuit (26), as a result of which the at least one blending valve (24) can be placed in an at least partially opened state in such a way that brake fluid from the at least one first wheel brake cylinder (32) can be displaced into at least one storage chamber (30) of the first brake circuit (26), and at least a first brake pressure which is present in at least a first wheel brake cylinder (32) of the first brake circuit (26) can be limited to a response pressure of the at least one storage chamber (30), wherein the actuation device (12) is also configured, at least in the first operating mode, taking into account the at least one supplied sensor signal (16), to output at least a second control signal (34) to a pressure discharge valve (36) of the second brake circuit (38), as a result of which the pressure discharge valve (36) can be placed in an at least partially opened state in such a way that brake fluid can be displaced into a brake fluid reservoir (44) which is connected on the output side to the pressure discharge valve (36), and at least the first brake pressure which is present in the at least one first wheel brake cylinder (32) of the first brake circuit (26) can additionally be reduced below the response pressure of the at least one storage chamber (30).

2. Hydraulic brake system according to Claim 1, wherein the actuation device (12) is configured to output the at least one first control signal (22) to at least one wheel outlet valve (24) of the first brake circuit (26) as the at least one blending valve (24).

3. Hydraulic brake system according to Claim 1 or 2, wherein the actuation device (12) is additionally configured to output the at least one first control signal (22) and/or the at least one second control signal (34) while additionally taking into account at least one supplied information item (46) relating to a possible generator braking torque (MgenO) which is the maximum possible generator braking torque which can be executed at that particular time by means of at least one electric motor.

4. Hydraulic brake system according to one of the preceding claims, wherein the actuation device (12), in a second operating mode, is additionally configured, for the purpose of limiting or preventing an increase in at least the first brake pressure in the at least one first wheel brake cylinder (32) of the first brake circuit (26) despite the activation of the brake activation element (18), to leave the at least one blending valve (24) in its closed state and to place the pressure discharge valve (36) in the at least partially opened state in such a way that brake fluid can be displaced into the brake fluid reservoir (44) which is connected on the output side to the pressure discharge valve (36).

5. Hydraulic brake system according to Claim 1, wherein the hydraulic brake system is configured with an X brake circuit arrangement.

6. Method for operating a hydraulic brake system of a vehicle having two brake circuits, wherein the brake circuits each have a switching valve with in each case one non-return valve (28a, 40a), which opens in the direction of the wheel brake cylinders (32, 42), in a bypass line (28b, 40b) which runs parallel to the switching valves (28, 40); having the step of:
limiting at least a first brake pressure, present in at least a first wheel brake cylinder (32) of a first brake circuit (26) of the hydraulic brake system, which first brake circuit (26) is connected to a first brake-activation-element-side pressure chamber of a master brake cylinder (20) of the hydraulic brake system via the first switching valve (28) of the first brake circuit (26), by placing at least one blending valve (24) of the first brake circuit (26) in an at least partially opened state at least temporarily during activation of the brake activation element (18), connected to the master brake cylinder (20), in order to displace brake fluid from the at least one first wheel brake cylinder (32) into at least one storage chamber (30) of the first brake circuit (26), as a result of which the at least one first brake pressure is limited to a response pressure of the at least one storage chamber (30); and
having the further step of:
additionally reducing at least the first brake pressure which is, present in the at least one first wheel brake cylinder (32) of the first brake circuit (26) below the response pressure of the at least one storage chamber (30) by placing a pressure discharge valve (36) of a second brake circuit (38) of the hydraulic brake system, which second brake circuit (38) is connected to a second pressure chamber of the master brake cylinder (20) which is equipped with a floating piston between the first pressure chamber and the second pressure chamber via the second switching valve (40) of the second brake circuit (38), and has at least a second wheel brake cylinder (42), in an at least partially opened state in order to displace brake fluid into a brake fluid reservoir (44) which is connected on the output side to the pressure discharge valve (36).

7. Method according to Claim 6, wherein at least one wheel outlet valve (24) of the first brake circuit (26) is placed, as the at least one blending valve (24), at least temporarily in the at least partially opened state during the activation of the brake activation element (18).

8. Method according to Claim 6 or 7, wherein the at least one blending valve (24) and/or the pressure discharge valve (36) are actuated while additionally taking into account at least one supplied information item (46) relating to a possible generator braking torque (Mgen0) which is the maximum possible generator braking torque which can be executed at that particular time by means of at least one electric motor.

9. Method according to one of Claims 6 to 8, wherein an increase in at least the first brake pressure in the at least one first wheel brake cylinder (32) of the first brake circuit (26) despite the activation of the brake activation element (18) is prevented or limited by the steps of:
leaving the at least one blending valve (24) in its closed state; and
placing the pressure discharge valve (36) in the at least partially opened state in such a way that brake fluid is displaced into the brake fluid reservoir (44) which is connected on the output side to the pressure discharge valve (36).

10. Method according to one of Claims 6 to 9, wherein the hydraulic brake system which is operated by means of this method is configured with an X brake circuit arrangement.

## Revendications

1. Système de frein hydraulique pour un véhicule, comprenant :
un maître-cylindre de frein (20) qui peut être actionné au moyen d'un élément d'actionnement de frein (18), comprenant un piston flottant entre une première chambre de compression et une deuxième chambre de compression ;
un premier circuit de frein (26), qui est raccordé par le biais d'une première vanne d'inversion (28) du premier circuit de frein (26) à la première chambre de compression côté élément d'actionnement de frein du maître-cylindre de frein (20) et qui possède au moins un premier cylindre de frein de roue (32) ;
un deuxième circuit de frein (38), qui est raccordé par le biais d'une deuxième vanne d'inversion (40) du deuxième circuit de frein (38) à la deuxième chambre de compression du maître-cylindre de frein (20) et qui possède au moins un deuxième cylindre de frein de roue (42), les vannes d'inversion (28, 40) possédant respectivement un clapet anti-retour (28a, 40a), qui s'ouvre en direction du cylindre de frein de roue (32, 42), dans une conduite de dérivation (28b, 40b) qui s'étend parallèlement aux vannes d'inversion (28, 40) ; et
un dispositif de commande (10) pourvu d'un appareil de pilotage (12) qui est conçu pour, au moins dans un premier mode de fonctionnement en tenant compte d'au moins un signal de capteur (16) mis à disposition d'au moins un capteur d'élément d'actionnement de frein (14), délivrer au moins temporairement, pendant un actionnement de l'élément d'actionnement de frein (18) raccordé au maître-cylindre de frein (20) du système de frein hydraulique, au moins un premier signal de commande (22) à au moins une vanne à diaphragme (24) du premier circuit de frein (26), ce par quoi l'au moins une vanne à diaphragme (24) peut être commandée dans un état au moins partiellement ouvert de telle sorte que le liquide de frein en provenance de l'au moins un premier cylindre de frein de roue (32) peut être déplacé dans au moins une chambre d'accumulation (30) du premier circuit de frein (26) et au moins une première pression de freinage présente dans au moins un premier cylindre de frein de roue (32) du premier circuit de frein (26) peut être limitée à une pression de réponse de l'au moins une chambre d'accumulation (30),
l'appareil de pilotage (12), au moins dans le premier mode de fonctionnement en tenant compte de l'au moins un signal de capteur (16) mis à disposition, étant également conçu pour délivrer au moins un deuxième signal de commande (34) à une vanne de décharge (36) du deuxième circuit de frein (38), ce par quoi la vanne de décharge (36) peut être commandée dans un état au moins partiellement ouvert de telle sorte que le liquide de frein peut être déplacé dans un réservoir à liquide de frein (44) raccordé du côté de la sortie à la vanne de décharge (36) et au moins la première pression de freinage présente dans l'au moins un premier cylindre de frein de roue (32) du premier circuit de frein (26) peut en plus être réduite au-dessous de la pression de réponse de l'au moins une chambre d'accumulation (30).

2. Système de frein hydraulique selon la revendication 1, l'appareil de pilotage (12) étant conçu pour délivrer l'au moins un premier signal de commande (22) à au moins une vanne de sortie de roue (24) du premier circuit de frein (26) qui fait office de l'au moins une vanne à diaphragme (24).

3. Système de frein hydraulique selon la revendication 1 ou 2, l'appareil de pilotage (12) étant en outre conçu pour délivrer l'au moins un premier signal de commande (22) et/ou l'au moins un deuxième signal de commande (34) en tenant en plus compte d'au moins une information (46) mise à disposition concernant un moment de freinage de générateur possible (Mgen0) actuellement maximal réalisable au moyen d'au moins un moteur électrique.

4. Système de frein hydraulique selon l'une des revendications précédentes, l'appareil de pilotage (12) étant en outre conçu pour, dans un deuxième mode de fonctionnement, en vue de limiter ou d'empêcher une augmentation d'au moins la première pression de freinage dans l'au moins un premier cylindre de frein de roue (32) du premier circuit de frein (26) malgré l'actionnement de l'élément d'actionnement de frein (18), laisser l'au moins une vanne à diaphragme (24) dans son état fermé et commander la vanne de décharge (36) dans l'état au moins partiellement ouvert de telle sorte que le liquide de frein peut être déplacé dans le réservoir à liquide de frein (44) raccordé du côté de la sortie à la vanne de décharge (36).

5. Système de frein hydraulique selon la revendication 1, le système de frein hydraulique étant conçu avec une division en X du circuit de frein.

6. Procédé pour faire fonctionner un système de frein hydraulique d'un véhicule comprenant deux circuits de frein, les circuits de frein possédant respectivement une vanne d'inversion avec à chaque fois un clapet anti-retour (28a, 40a) qui s'ouvre en direction du cylindre de frein de roue (32, 42) dans une conduite de dérivation (28b, 40b) qui s'étend parallèlement aux vannes d'inversion (28, 40), comprenant les étapes suivantes :
limitation d'au moins une première pression de freinage présente dans au moins un premier cylindre de frein de roue (32) d'un premier circuit de frein (26) du système de frein hydraulique, lequel est raccordé par le biais de la première vanne d'inversion (28) du premier circuit de frein (26) à une première chambre de compression côté élément d'actionnement de frein d'un maître-cylindre de frein (20) du système de frein hydraulique, en commandant au moins une vanne à diaphragme (24) du premier circuit de frein (26) dans un état au moins partiellement ouvert au moins temporairement pendant un actionnement de l'élément d'actionnement de frein (18) raccordé au maître-cylindre de frein (20) pour déplacer du liquide de frein depuis l'au moins un premier cylindre de frein de roue (32) dans au moins une chambre d'accumulation (30) du premier circuit de frein (26), ce par quoi l'au moins une première pression de freinage est limitée à une pression de réaction de l'au moins une chambre d'accumulation (30) ; et
comprenant l'étape supplémentaire suivante :
en plus réduction au moins de la première pression de freinage présente dans l'au moins un premier cylindre de frein de roue (32) du premier circuit de frein (26) au-dessous de la pression de réaction de l'au moins une chambre d'accumulation (30) en commandant une vanne de décharge (36) d'un deuxième circuit de frein (38) du système de frein hydraulique, lequel est raccordé par le biais de la deuxième vanne d'inversion (40) du deuxième circuit de frein (38) à une deuxième chambre de compression du maître-cylindre de frein (20), équipé d'un piston flottant entre la première chambre de compression et la deuxième chambre de compression, et lequel possède au moins un deuxième cylindre de frein de roue (42), dans un état au moins partiellement ouvert en vue de déplacer le liquide de frein dans un réservoir à liquide de frein (44) raccordé du côté de la sortie à la vanne de décharge (36).

7. Procédé selon la revendication 6, au moins une vanne de sortie de roue (24) du premier circuit de frein (26) qui fait office de l'au moins une vanne à diaphragme (24) étant commandée dans l'état au moins partiellement ouvert au moins temporairement pendant l'actionnement de l'élément d'actionnement de frein (18) .

8. Procédé selon la revendication 6 ou 7, l'au moins une vanne à diaphragme (24) et/ou la vanne de décharge (36) étant commandées en tenant en plus compte d'au moins une information (46) mise à disposition concernant un moment de freinage de générateur possible (MgenO) actuellement maximal réalisable au moyen d'au moins un moteur électrique.

9. Procédé selon l'une des revendications 6 à 8, une augmentation d'au moins la première pression de freinage présente dans l'au moins un premier cylindre de frein de roue (32) du premier circuit de frein (26) étant empêchée ou limitée par les étapes suivantes malgré l'actionnement de l'élément d'actionnement de frein (18) :
maintien de l'au moins une vanne à diaphragme (24) dans son état fermé ; et
commande de la vanne de décharge (36) dans l'état au moins partiellement ouvert de telle sorte que le liquide de frein est déplacé dans le réservoir à liquide de frein (44) raccordé du côté de la sortie à la vanne de décharge (36).

10. Procédé selon l'une des revendications 6 à 9, le système de frein hydraulique qui fonctionne au moyen de ce procédé étant conçu avec une division en X du circuit de frein.
